# EUROPÄISCHE PATENTSCHRIFT

(11) **EP 2 160 236 B1**
(45) Veröffentlichungstag und Bekanntmachung des Hinweises auf die Patenterteilung: **03.12.2014**
(21) Anmeldenummer: 08758816.6
(22) Anmeldetag: 28.05.2008
(51) Int. Cl.: B01J 8/00, B01J 8/02, B01J 15/00, B01J 19/00, C01B 21/26, C01B 21/28

(54) **VORRICHTUNG UND VERFAHREN FÜR DIE KATALYTISCHE GASPHASENREAKTION VON AMMONIAK SOWIE DEREN VERWENDUNG**
DEVICE AND METHOD FOR THE CATALYTIC GAS PHASE REACTION OF AMMONIA AND THE USE THEREOF
DISPOSITIF ET PROCÉDÉ POUR LA RÉACTION CATALYTIQUE EN PHASE GAZEUSE DE L'AMMONIAC ET LEUR UTILISATION

(30) Priorität: 06.06.2007 DE 102007026712
(43) Veröffentlichungstag der Anmeldung: 10.03.2010
(73) Patentinhaber: ThyssenKrupp Industrial Solutions AG, 45143 Essen (DE)
(72) Erfinder: SCHWEFER, Meinhard, 59872 Meschede (DE); GROVES, Michael, 58285 Gevelsberg (DE); FUCHS, Jürgen, 44139 Dortmund (DE); MAURER, Rainer, 58332 Schwelm (DE); SIEFERT, Rolf, 33378 Rheda-Wiedenbrück (DE); HÜNDGEN, Bernhard, 46483 Wesel (DE)
(74) Vertreter: Wolff, Felix
(86) Internationale Anmeldenummer: PCT/EP2008/004232
(87) Internationale Veröffentlichungsnummer: WO 2008/148487

(56) Entgegenhaltungen:
- EP-A- 0 334 710
- EP-A- 1 028 089
- US-A- 3 576 600
- US-A- 5 266 291

## Beschreibung

Die vorliegende Erfindung betrifft verbesserte Reaktoren für die katalytische Oxidation von Ammoniak in der Gasphase und damit durchzuführende Verfahren, welche sich beispielsweise als Komponenten bei der Herstellung von Caprolactam oder insbesondere von Salpetersäure verwenden lassen.

Bei der Durchführung von katalytischen Gasphasenreaktionen wird in vielen Fällen Reaktionswärme freigesetzt. Die dadurch innerhalb des Reaktors hervorgerufene Temperaturerhöhung kann eine Gefahrenquelle darstellen, insbesondere wenn mit explosiven Eduktgemischen gearbeitet wird.

Die bei exothermen Gasphasenreaktionen freigesetzte Wärme kann in die vor der Reaktionszone liegenden Abschnitte des Reaktors gelangen, beispielsweise durch Wärmeleitung über die aufgeheizten Reaktorwände, durch Konvektion vermittelt durch in Gegenstromrichtung sich bewegende Wirbel der Reaktionsgase oder durch Wärmestrahlung. Als Folge dieses Wärmetransports kann sich das Eduktgas bereits vor Erreichen der Reaktionszone so stark erhitzen, daß vor Erreichen dieser Zone bereits unerwünschte Nebenreaktionen oder unkontrolliert ablaufende Vorreaktionen die Folge sind.

Ein Beispiel für eine in großem Maßstab industriell durchgeführte exotherme Gasphasenreaktion ist die Herstellung von Salpetersäure ("HNO₃"). Diese erfolgt im industriellen Maßstab im allgemeinen nach dem Ostwald-Verfahren durch katalytische Oxidation von Ammoniak an Pt/Rh-Katalysatoren. Dabei wird NH₃ sehr selektiv zu NO oxidiert, welches dann im Laufe des weiteren Prozesses zu NO₂ oxidiert wird und schließlich mit Wasser in einem Absorptionsturm zu HNO₃ umgesetzt wird. Die Pt/Rh-Katalysatoren sind als dünne Netze ausgebildet und in einem Brenner auf breiter Fläche aufgespannt. Übliche Dimensionen für diese Netze liegen im Bereich von 0,5-5 m Durchmesser. Die Stärke der Netzpackung beträgt üblicherweise, ja nach Anzahl der eingesetzten Netze, wenige Millimeter bis maximal 2 Zentimeter. Die Netze werden von einem Gasgemisch aus typischerweise etwa 8 -12 Vol% Ammoniak und Luft durchströmt, wobei sich an den Netzen durch die Exothermie der Reaktion eine Temperatur von etwa 850-950°C einstellt.

Das heiße Reaktionsgas wird anschließend in einem Wärmeaustauscher abgekühlt, in dem Dampf erzeugt oder Prozessgas erwärmt wird.

Grund für die gewählte Katalysatorgeometrie von großem Durchmesser bei sehr geringer Höhe der Netze ist, daß die NH₃-Oxidation wegen möglicher Folgereaktion des NO einerseits mit einer sehr geringer Verweilzeit erfolgen muß und andererseits daß der durch die Durchströmung der Netze hervorgerufene Druckverlust sowie die mechanische Belastung der Netze möglichst gering gehalten werden soll. So erfolgt die Durchströmung der Netze bei der industriellen HNO₃-Produktion mit relativ geringer Lineargeschwindigkeit je nach Druckbereich im Bereich von etwa 0,4 - 1,0 m/s bei atmosphärischen Bedingungen, von etwa 1 - 3 m/s bei Mitteldruckverbrennungen im Bereich von 3 - 7 bar abs und von etwa 2 - 4 m/s bei Hochdruckverbrennungen im Bereich von 8 - 12 bar abs, wobei die Geschwindigkeitsangaben als Leerraumgeschwindigkeiten für das durch die Reaktionswärme aufgeheizte Gas zu verstehen sind. Bei zu schneller Anströmung kann zudem die Reaktion auf den Pt/Rh-Netzen durch die kühlende Wirkung des eintretenden Gasstromes erlöschen ("Blow-out"-Phänomen).

Die Untergrenze der Anströmgeschwindigkeit für das Ammoniak-Luft-Gemisch ist markiert durch die Flammgeschwindigkeit einer möglichen thermischen Ammoniakverbrennung, so daß ein Rückschlag der auf dem Katalysator gezündeten Reaktion in den freien Gasraum vor dem Katalysatorbett in jedem Fall ausgeschlossen ist.

Neben den klassischen Netzkatalysatoren wird in der wissenschaftlichen und Patentliteratur auch der Einsatz von auf Übergangsmetalloxiden basierenden Nichtedelmetall-Katalysatoren zur Ammoniakoxidation beschrieben. Diese können entweder für sich allein oder auch in Kombination mit Pt/Rh-Netzen eingesetzt werden.

Eine diesbezügliche Übersicht findet sich beispielsweise in Sadykov et al., Appl. Catal. General A: 204 (2000) 59-87. Triebkraft zur Verwendung von Nichtedelmetall-Katalysatoren ist die Einsparung von Edelmetallen, insbesondere von Platin. Edelmetall-Katalysatoren verbrauchen sich nämlich bei der Ammoniakoxidation und müssen so, je nach Belastung der Netze, in Abständen von etwa drei Monaten bis zu einem Jahr ausgetauscht werden, was erhebliche Kosten verursacht.

Üblicherweise werden die auf Übergangsmetalloxiden basierenden Katalysatoren ebenso wie auch die Pt/Rh-Netzkatalysatoren mit relativ niedrigen Anströmgeschwindigkeiten durchströmt. Dieses ist hier insbesondere deshalb notwendig, um die einmal auf den Katalysatoren gezündete Ammoniakoxidation nicht wieder zu löschen. Auf Übergangsmetalloxiden basierende Katalysatoren sind nämlich in der Regel weniger aktiv als Edelmetall-Katalysatoren und weisen im Vergleich zu diesen eine deutlich höhere Anspringtemperatur als auch eine höhere Löschtemperatur auf.

In WO-A-99/25,650 werden Maßnahmen beschrieben, wie durch den Einsatz von sehr feinkörnigen Katalysator-Pellets, welche in sogenannten Kartuschen ("cartridges") untergebracht sind, die "blow-out" Temperatur gesenkt werden kann, ohne dabei den Druckverlust zu weit ansteigen zu lassen.

Bei der katalytischen Oxidation von Ammoniak besteht zudem immer das Problem, daß sich Ammoniak vor der Kontaktierung mit dem eigentlichen Oxidationskatalysator z.B. an heißen Rohrwandungen entzündet und dabei unselektiv zu N₂ und H₂O oder auch N₂O verbrennt.

In EP-A-1,028,089 ist beschrieben, daß es durch Rückstrahlung der Ammoniakverbrennung auf Verteilereinbauten zur Zuführung des NH₃/Luftgemisches zur Erhitzung dieser Einbauten kommen kann, wodurch ein Teil des eintretenden NH₃ auf der Oberfläche dieser Einbauten zu N₂O oxidiert wird.

US-A-5,266,291 offenbart einen Oxidationsreaktor, der in der Eintrittszone eine Packung aus Teilchen inerten Materials aufweist. Diese Packung dient zur Durchmischung der eingeführten Gase und zur Vermeidung von vorzeitigen Zündungen des sich durch Vermischen gebildeten zündfähigen Gasgemisches.

Das Problem der NH₃-Vorzündung ist insbesondere bei den technisch relevanten, hohen NH₃-Konzentrationen von 8-12 Vol.% von Bedeutung, da sich hier durch die Exothermie der Reaktion die Verbrennung selbst unterhält und sogar verstärken kann.

Neben der eigentlichen Zündtemperatur, d.h. der kritischen Oberflächentemperatur, oberhalb welcher eine NH₃-Zersetzung auftreten kann, ist deshalb auch der Abtransport der durch die NH₃-Zersetzung frei werdenden Wärme von maßgeblicher Bedeutung.

Dieser Abtransport wird um so besser, je schneller der mit Ammoniak beladene Gasstrom über die Oberflächen strömt (Kühlwirkung) und je kälter dieser ist. Außerdem verkürzt sich die Verweilzeit das Eduktgasstromes vor Kontaktierung mit dem Katalysator und damit die Reaktionszeit der möglichen unselektiven Vorreaktion.

Bei der industriellen Herstellung von HNO₃ durch Oxidation von Ammoniak über Pt/Rh-Netzen ermöglicht die niedrige Anspringtemperatur der hochaktiven Pt/Rh-Katalysatoren eine relativ geringe Eintrittstemperatur von ca. 200°C. Auf diese Weise stellt die Ammoniakvorzündung trotz der niedrigen Anströmgeschwindigkeiten keine Hürde zur industriellen Realisierung des Verfahrens dar.

Beim Einsatz von Katalysatoren mit geringerer katalytischer Aktivität muß jedoch bei höheren Temperaturen (Vorheizung) des Eduktgasgemisches gearbeitet werden oder mit geringeren Anströmgeschwindigkeiten oder vorzugsweise mit einer Kombination beider Maßnahmen. Unter diesen Bedingungen steigt das Risiko einer Ammoniakvorzündung.

Versuche mit Wabenkatalysatoren, welche im Vergleich zu den Platinnetzen einen geringeren Querschnitt und eine größere Tiefe des Katalysatorbettes aufweisen haben nun gezeigt, dass die Selektivität der Bildung des gewünschten NOₓ bei geringen Anströmgeschwindigkeiten des Eduktgasgemisches nur sehr gering ist. Die Wirtschaftlichkeit eines solchen Verfahrens ist somit in Frage gestellt. Dieser Effekt könnte theoretisch durch Erhöhung der Anströmgeschwindigkeit des Eduktgasgemisches kompensiert werden. In der Praxis aber sind einer Erhöhung der Anströmgeschwindigkeiten jedoch Grenzen gesetzt, da eine unverhältnismäßige Erhöhung des Druckverlustes auftritt und zudem unter Umständen nur eine unvollständige Verbrennung des Ammoniaks erreicht wird.

Bei anderen industriell betriebenen exothermen Gasphasenreaktionen, wie z.B. anderen Oxidationsreaktionen als der Ammoniakoxidation, Epoxidierungen oder radikalischen Halogenierungen von Kohlenwasserstoffen bestehen prinzipiell die gleichen Probleme.

Aufgabe der vorliegenden Erfindung ist die Bereitstellung eines Reaktors und eines Verfahrens zur katalytischen exothermen Gasphasenreaktion, bei denen die Risiken der Vorzündung des eingesetzten Eduktgasgemisches bzw. des Ablaufes unerwünschter Nebenreaktionen verringert sind.

Die vorliegende Erfindung betrifft einen Reaktor für die katalytische, exotherme Oxidation von Ammoniak in der Gasphase durch Umsetzung eines Eduktgases zu einem Produktgas mit in Strömungsrichtung des Eduktgases gesehen einer Eintrittszone (1), einer mindestens einen Katalysator (4) enthaltenden Reaktionszone (2) und einer Austrittszone (3) für das Produktgas, bei dem in die Eintrittszone (1) ein Ammoniak und Sauerstoff enthaltendes Eduktgasgemisch eingeleitet wird, im Bereich der Eintrittszone (1) oder im Bereich der Eintrittszone (1) und der Reaktionszone (2) mindestens ein Isoliermantel (6) vorgesehen ist, der den Innenraum des Reaktors in der Höhe der Eintrittszone (1) oder in der Höhe der Eintrittszone (1) und der Reaktionszone (2) gegen die Reaktorummantelung (5, 20) isoliert und worin mindestens eine Vorrichtung (7a, 7b, 27) zum Durchleiten eines Kühlmediums im Bereich der Eintrittszone (1) oder im Bereich der Eintrittszone (1) und der Reaktionszone (2) vorgesehen ist, die sich in der Reaktorummantelung (5, 20) oder an der Innenwand der Reaktorummantelung (5, 20) befindet, wobei Isoliermantel (6) und Vorrichtung zum Durchleiten eines Kühlmediums (7a, 7b, 27) den Wärmetransport von der Reaktionszone (2) in die Eintrittszone (1) verringern und worin die Innenwände des Reaktors im Bereich der Eintrittszone (1) oder im Bereich der Eintrittszone (1) und der Reaktionszone (2) aus inertem Material bestehen.

Das Eduktgas wird dem Reaktor über die Eintrittszone (1) zugeführt und strömt sodann durch die Reaktionszone (2), in der sich der Katalysator (4) befindet. Dort reagiert das Eduktgas ganz oder teilweise in exothermer Reaktion unter Bildung des Produktgases ab, welches anschließend durch die Austrittszone (3) den Reaktor verläßt. Infolge der in der Reaktionszone (2) erzeugten Wärme besteht das Risiko, daß diese Wärme durch Leitung, Konvektion und/oder Strahlung zumindest teilweise im Gegenstrom zum Eduktgas in die Eintrittszone (1) transportiert wird und dort das Eduktgas bzw. die Oberfläche der Reaktorwand in der Eintrittszone (1) in unvertretbarer Weise erhitzt.

Um dieses zu verhindern oder zumindest zu erschweren sind erfindungsgemäß im Bereich der Eintrittszone (1) oder im Bereich der Eintrittszone (1) und der Reaktionszone (2) Mittel vorgesehen, welche den Wärmetransport von der Reaktionszone (2) in die Eintrittszone (1) verringern.

Darüber hinaus sind die Innenwände des Reaktors im Bereich der Eintrittszone (1) oder im Bereich der Eintrittszone (1) und der Reaktionszone (2) aus inertem Material ausgestaltet. Diese Ausführungsform verhindert oder erschwert die katalytische Umsetzung des Eduktgases an den Reaktorinnenwänden.

Unter dem Begriff "inertes Material" sind im Rahmen dieser Beschreibung sämtliche Materialien zu verstehen, welche bei den in der Eintrittszone herrschenden Temperaturen in den Eduktgasen bzw. bei den Temperaturen an den Oberflächen der Innenwand der Eintrittszone keine unerwünschten Nebenreaktionen fördern. Diese Materialien können zusätzlich den Wärmetransport von der Reaktionszone (2) in die Eintrittszone (1) verringern. Eine bevorzugte Ausführungsform sind inerte und thermisch isolierende Materialien.

Die inerten Materialien decken die Reaktorinnenwände ab. Diese sind z.B. auf den Reaktorinnenwänden angebracht oder liegen in Form von Hülsen im Reaktor vor oder die Reaktorwände bestehen aus inerten Materialien.

Beispiele für inerte Materialien sind Keramiken, insbesondere dichtgesinterte Keramiken, und ferner Quarzglas, Schamotte, Email sowie Metalle mit polierten Oberflächen.

Als Mittel zur Verringerung des Wärmetransports von der Reaktionszone (2) in die Eintrittszone (1) ist im Bereich der Eintrittszone (1) oder im Bereich der Eintrittszone (1) und der Reaktionszone (2) ein Isoliermantel (6) vorgesehen, der den Innenraum des Reaktors gegen die Reaktorummantelung (5) isoliert. Dieser Isoliermantel (6) wirkt im wesentlichen auf zwei Weisen. Wärme, die entlang der thermisch gut leitfähigen Reaktorummantelung (5) von der Reaktionszone (2) in die Eintrittszone (1) gelangt, kann nur schwer durch den schlecht wärmeleitenden Isoliermantel (6) auf die dem Eduktgas zugewandte Oberfläche transportiert werden. Außerdem ist die direkte Wärmeleitung entlang des Isoliermantels (6) von der Reaktionszone (2) in die Eintrittszone (1) infolge der niedrigen Wärmeleitfähigkeit des Isoliermantels (6) reduziert.

Darüber hinaus ist im Bereich der Eintrittszone (1) oder im Bereich der Eintrittszone (1) und der Reaktionszone (2) eine Vorrichtung zum Durchleiten eines Kühlmediums vorgesehen. Diese Vorrichtung nimmt die in der Reaktionszone (2) erzeugte Wärme teilweise auf, so daß diese Wärme für einen Wärmetransport in die Eintrittszone (1) nicht mehr zur Verfügung steht und/oder so dass diese Wärme an einer Stelle der Eintrittszone (1) in das Eduktgas eingeleitet wird, an der dieses noch so kühl ist, daß eine durch die Einleitung des Kühlmediums hervorgerufene Temperaturerhöhung unkritisch ist; oder das Kühlmedium kühlt die zur Reaktionszone (2) benachbarte Eintrittszone (1) so stark ab, daß die Temperatur der Eintrittszone (1) trotz der aus der Reaktionszone (2) abgeleiteten Wärme im unkritischen Bereich bleibt. Der erfindungsgemäße Reaktor weist eine Kombination beider Maßnahmen auf.

Beim erfindungsgemäßen Reaktor sind im Bereich der Eintrittszone (1) oder im Bereich der Eintrittszone (1) und der Reaktionszone (2) Mittel vorgesehen, welche den Wärmetransport von der Reaktionszone (2) in die Eintrittszone (1) verringern und die Innenwände des Reaktors bestehen im Bereich der Eintrittszone (1) oder im Bereich der Eintrittszone (1) und der Reaktionszone (2) aus inertem Material.

Die Erfindung betrifft auch ein Verfahren zur Durchführung einer katalytischen exothermen Oxidation von Ammoniak in der Gasphase unter Einsatz des oben beschriebenen Reaktors.

Das Verfahren weist folgende Maßnahmen auf:
i) Einleiten eines Ammoniak und Sauerstoff enthaltenden Eduktgasgemisches in die Eintrittszone (1) eines Reaktors,
ii) Zuführen des Eduktgasgemisches zu einer Katalysator (4) enthaltenden Reaktionszone (2) unter Bedingungen, daß sich das Eduktgasgemisch in der Reaktionszone (4) in exothemer Reaktion ganz oder teilweise zu einem Produktgas umsetzt,
iii) Abführen des Produktgases durch eine Austrittszone (3) aus dem Reaktor, und
iv) Bereitstellen von Mitteln zur Verringerung des Transports von Reaktionswärme von der Reaktionszone (2) in die Eintrittszone (1) in der Form mindestens eines Isoliermantels (6), der den Innenraum des Reaktors in der Höhe der Eintrittszone (1) oder in der Höhe der Eintrittszone (1) und der Reaktionszone (2) gegen die Reaktorummantelung (5) isoliert und mindestens einer Vorrichtung (7a, 7b, 27) zum Durchleiten eines Kühlmediums im Bereich der Eintrittszone (1) oder im Bereich der Eintrittszone (1) und der Reaktionszone (2), die sich in der Reaktorummantelung (5, 20) oder an der Innenwand der Reaktorummantelung (5, 20) befindet, und Verwenden eines Reaktors, dessen die Innenwände im Bereich der Eintrittszone (1) oder im Bereich der Eintrittszone (1) und der Reaktionszone (2) aus inertem Material bestehen.

Als Eduktgase werden Ammoniak und Sauerstoff enthaltende Eduktgasgemische eingesetzt.

Der erfindungsgemäße Reaktor wird zur Oxidation von Ammoniak eingesetzt, insbesondere zur Herstellung von Caprolactam und Salpetersäure.

Ebenfalls bevorzugt wird der erfindungsgemäße Reaktor für die Durchführung der Andrussow-Reaktion eingesetzt, insbesondere zur Herstellung von Cyanwasserstoff aus Ammoniak, Sauerstoff und Kohlenwasserstoffen, vorzugsweise Methan.

In der nachfolgenden Beschreibung wird die Ammoniakoxidation zur Salpetersäureherstellung beispielhaft als Modellreaktion näher dargestellt. Prinzipiell sind erfindungsgemäßer Reaktor und Verfahren - wie oben dargelegt - aber auch für andere Reaktionen geeignet.

Als Katalysatoren können alle für die betreffende Zielreaktion bzw. Zielreaktionen geeigneten Katalysatoren eingesetzt werden. Diese können z.B. in reiner Form als Vollkatalysatoren oder geträgert zum Einsatz kommen. Es können auch alle üblichen Katalysatorgeometrien verwendet werden, beispielsweise Pellets, Granulate, Extrudate oder Pulver in der Form von Schüttungen, Packungen, Netzen oder anderen Formen, wie beispielsweise in Form von monolithischen Wabenkörpern.

Erfindungsgemäß können dabei insbesondere Übergangsmetalloxid enthaltende Katalysatoren eingesetzt werden, wie diese beispielsweise in Appl. Catal. General A: 204 (2000) 59-87, in US-A-5,690,900 oder in EP-A-946,290 beschrieben sind. Besonders geeignet sind Kobalt enthaltende Katalysatoren. Als Strukturtyp sind insbesondere Perowskite vorteilhaft.

Bevorzugt werden erfindungsgemäß für die Ammoniakoxidation Katalysatoren in Wabenform eingesetzt. Diese können z.B. als wabenförmige Vollkatalysatoren vorliegen oder geträgert in Form von wabenförmigen Trägern, auf denen und/oder in die katalytisch aktives Material eingebracht ist.

Besonders bevorzugt werden Katalysatoren eingesetzt, beispielsweise in der Form von Schüttungen, Packungen oder Waben, die in Strömungsrichtung gesehen, eine Tiefe von mindestens 3 cm, vorzugsweise mindestens 5 cm, insbesondere mindestens 10 cm und ganz besonders bevorzugt 10 bis 200 cm aufweisen.

Die nachfolgenden Beispiele und Figuren erläutern die Erfindung ohne diese dadurch zu begrenzen. Es zeigen:
Figur 1: Eine Vorrichtung im Längsschnitt (nicht erfindungsgemäß).
Figur 2: Eine weitere Vorrichtung im Längsschnitt (nicht erfindungsgemäß).
Figur 3: Eine erfindungsgemäße Vorrichtung im Längsschnitt.
Figur 4: Eine weitere Vorrichtung im Längsschnitt (nicht erfindungsgemäß).
Figur 5: Eine weitere erfindungsgemäße Vorrichtung im Längsschnitt.
Figur 6: Einen erfindungsgemäß modifizierten Ammoniakoxidationsreaktor im Längsschnitt
Figur 7: Eine weitere erfindungsgemäße Vorrichtung im Längsschnitt.

Die Figuren werden in den folgenden Beispielen im Einzelnen beschrieben.

### Beispiel 1 (nicht erfindungsgemäß)

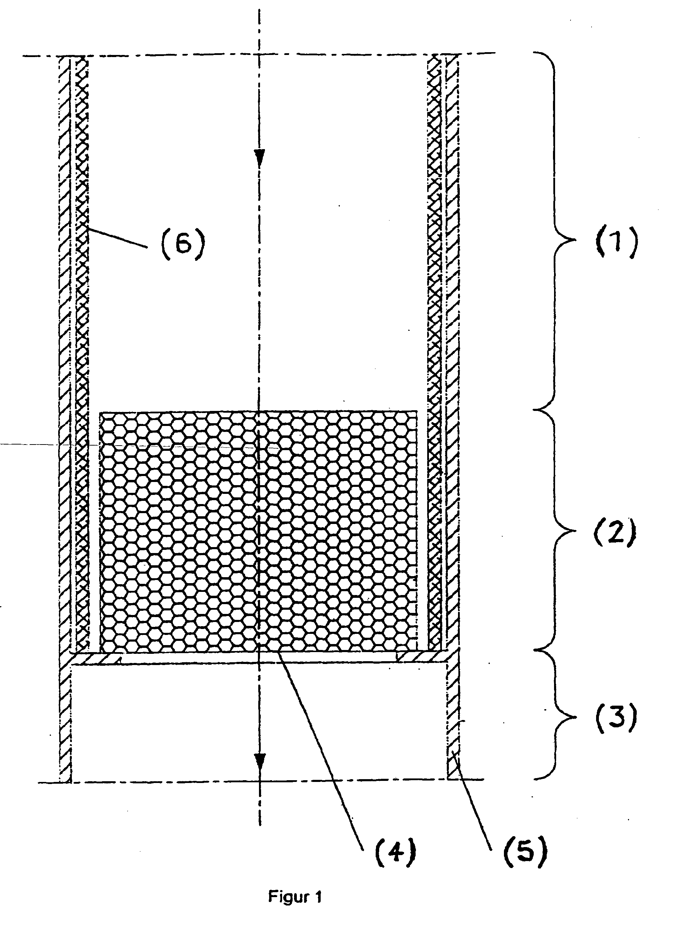

In Figur 1 werden anhand einer Ammoniakoxidationsvorrichtung einige prinzipiellen Merkmale eines Reaktors erläutert.

Eine Ammoniakoxidationsvorrichtung läßt sich in drei Zonen aufteilen, nämlich in eine Eintrittszone (1), in eine Reaktionszone (2) und in eine Austrittszone (3).

Das ammoniak-/sauerstoffhaltige Gasgemisch (nachstehend "Eduktgasgemisch") wird in die Eintrittszone (1) eingeleitet und trifft in der sich daran anschließenden Reaktionszone (2) auf den Ammoniakoxidationskatalysator (4). Anschließend verläßt das Produktgasgemisch der Oxidationsreaktionen die Reaktionszone (2) durch die Austrittszone (3).

In der in Figur 1 dargestellten Ausführungsform sind alle drei Zonen (1, 2, 3) der Vorrichtung von einer Ummantelung (5) umgeben, welche zusätzlich Träger für den Katalysator (4) sowie für einen Isoliermantel (6) ist. Die Ummantelung (5) kann selbst die Wände eines Druckbehälters darstellen, oder alternativ kann die Ummantelung in einem Raum untergebracht werden, der wiederum selbst von einem in Figur 1 nicht dargestellten Druckmantel umgeben ist.

Der thermischen Entkopplung von Eintrittszone (1) und Reaktionszone (2) dient der Isoliermantel (6), der aus einem thermisch isolierenden und gasdichten Material besteht. Der Isoliermantel (6) verhindert bzw. erschwert, daß infolge von Wärmeleitung durch die Ummantelung (5) von der Reaktionszone (2) in die Eintrittszone (1) gelangende Wärme, in das Eduktgasgemisch übertragen wird. Der Teil der sich in der Eintrittszone befindenden Ummantelung (5) wird durch die Wärmeleitung der Reaktionswärme aus der Reaktionszone (2) zwar heißer, aber die Übertragung der Wärme in das Eduktgasgemisch wird durch den thermisch isolierenden Isoliermantel (6) stark gehemmt. Da der Isoliermantel (6) nur gering wärmeleitend ist, verhindert bzw. erschwert der Isoliermantel (6) auch den direkten Wärmetransport entlang des Isoliermantels (6) von der Reaktionszone (2) in die Eintrittszone (1). Durch geeignete Wahl der Materialien und der Stärke des Isoliermantels (6) bleibt die Temperatur der dem Eduktgasgemisch zugewandten Wand des Isoliermantels (6) unterhalb der Zünd- bzw. Reaktionstemperatur des Eduktgasgemisches, und unerwünschte vorzeitige Reaktionen werden unterbunden.

### Beispiel 2 (nicht erfindungsgemäß)

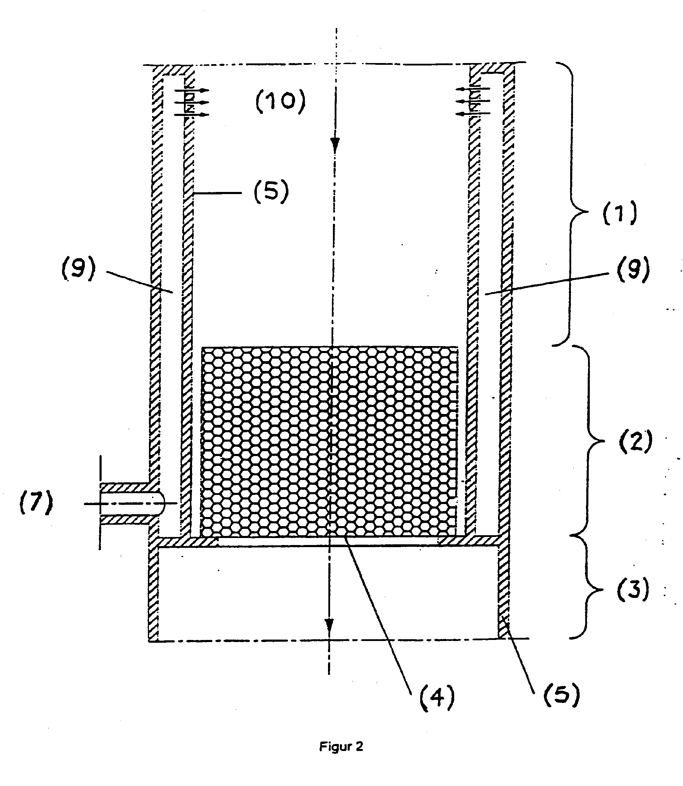

In Figur 2 ist eine ähnliche Vorrichtung wie in Figur 1 dargestellt. Bis auf die Realisierung der thermischen Entkopplung zwischen Eintritts- und Reaktionszone (1, 2) ähnelt diese Ausführungsform der Vorrichtung des Beispiels 1.

Auch in dieser Ammoniakoxidationsvorrichtung liegen Eintrittszone (1), Reaktionszone (2) und Austrittszone (3) vor.

Das ammoniak-/sauerstoffhaltige Gasgemisch wird in die Eintrittszone (1) eingeleitet. Danach trifft das Gemisch in der Reaktionszone (2) auf den Ammoniakoxidationskatalysator (4). Anschließend verläßt das Produktgemisch der Oxidationsreaktionen die Reaktionszone (2) durch die Austrittszone (3).

Die Ummantelung (5) aller drei Zonen hält den Katalysator (4). Die Ummantelung (5) kann selbst die Wände eines Druckbehälters darstellen, oder alternativ kann die Ummantelung in einem Raum untergebracht werden, der wiederum selbst von einem Druckmantel umgeben ist (hier nicht dargestellt).

In der Höhe der Eintritts- und Reaktionszone (1, 2) wird die Ummantelung (5) doppelwandig ausgeführt. An dem Ende der Doppelwand in der Höhe der Reaktionszone (2) ist ein Einlaß (7) für ein Kühlmedium angebracht, das mit dem Eduktgasgemisch, den im Reaktor gewünschten Reaktionen, dem Katalysator (4) und dem Produktgasgemisch verträglich ist. Für den Einsatz in Salpetersäureanlagen kann beispielsweise Luft als geeignetes Kühlmedium eingesetzt werden.

Das Kühlmedium fließt durch den Raum (9) in der Doppelwand und kühlt dadurch die innere Wand der Ummantelung (5). Dadurch wird eine thermische Entkopplung der Eintrittszone (1) von der Reaktionszone (2) realisiert, da die infolge von Wärmeleitung durch die Ummantelung (5) von der Reaktionszone (2) in die Eintrittszone (1) gelangende Wärme in das Kühlmedium übertragen wird.

Durch mehrere kleine Öffnungen (10) am Ende der Doppelwand in der Höhe der Eintrittszone (1) tritt das Kühlmedium in die Eintrittszone (1) ein und vermischt sich mit dem Eduktgasgemisch.

Durch geeignete Wahl der Abstände Einlaß (7) und Öffnungen (10) sowie durch geeignete Wahl von Art, Menge, Strömungsgeschwindigkeit und Eintrittstemperatur des Kühlmediums läßt sich die Temperatur im Eduktgasgemisch und an der inneren Oberfläche der Ummantelung (5) unterhalb der Zünd- bzw. Reaktionstemperatur des Eduktgasgemisches regulieren und unerwünschte vorzeitige Reaktionen werden unterbunden.

### Beispiel 3 (erfindungsgemäß)

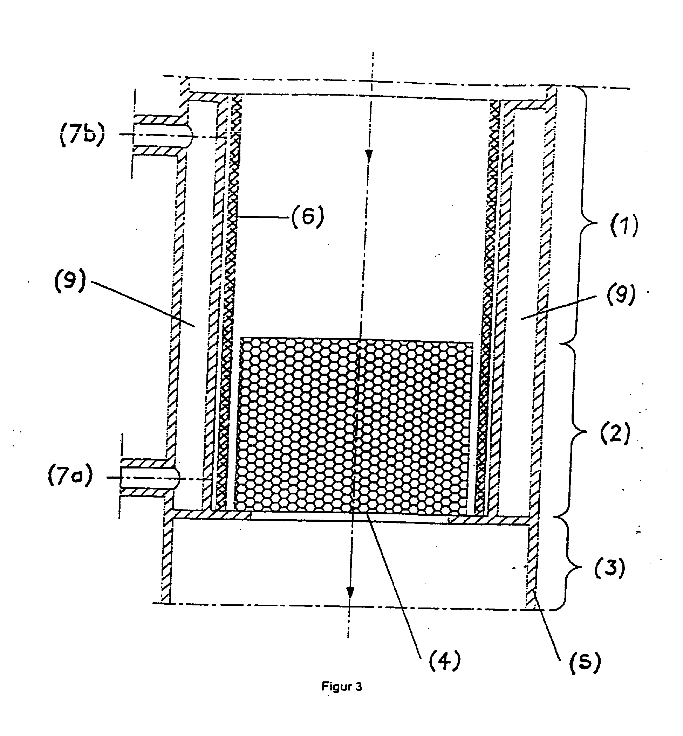

In Figur 3 ist eine erfindungsgemäße Vorrichtung dargestellt, die eine besonders effektive thermische Entkopplung zwischen Eintritts- und Reaktionszone erlaubt.

Auch in dieser Ammoniakoxidationsvorrichtung liegen Eintrittszone (1), Reaktionszone (2) und Austrittszone (3) vor.

Das ammoniak-/sauerstoffhaltige Gasgemisch wird in die Eintrittszone (1) eingeleitet. Danach trifft das Gemisch auf den Ammoniakoxidationskatalysator (4) in der Reaktionszone (2). Anschließend verläßt das Produktgemisch der Oxidationsreaktionen die Reaktionszone (2) durch die Austrittszone (3).

Die Ummantelung (5) aller drei Zonen hält den Katalysator (4) und den Isoliermantel (6). Die Ummantelung (5) kann selbst die Wände eines Druckbehälters darstellen, oder alternativ kann die Ummantelung (5) in einem Raum untergebracht werden, der wiederum selbst von einem Druckmantel umgeben ist (hier nicht dargestellt).

In der Höhe der Eintritts- und Reaktionszone (1, 2) wird die Ummantelung (5) doppelwandig ausgeführt. Dort sind auch Anschlüsse (7a, 7b) für ein Kühlmedium angebracht. Geeignete Kühlmedien sind zum Beispiel Wasser oder Luft. Das Kühlmedium kann in oder gegen die Strömungsrichtung des Eduktgasgemisches fließen. Zur thermischen Entkopplung der Eintrittszone (1) von der Reaktionszone (2) dienen sowohl der Isoliermantel (6) als auch die Beaufschlagung des Raums (9) zwischen den Doppelwänden der Ummantelung (5) mit einem Kühlmedium.

Der aus einem thermisch isolierenden Material bestehende und die Ummantelung (5) in der Höhe der Reaktionszone (2) und der Eintrittszone (1) abdeckende Isoliermantel (6) verhindert, daß die infolge von Wärmeleitung durch die Ummantelung (5) von der Reaktionszone (2) in die Eintrittszone (1) gelangende Wärme, in das Eduktgasgemisch übertragen wird. Da der Isoliermantel (6) nur gering wärmeleitend ist, verhindert bzw. erschwert der Isoliermantel (6) auch den direkten Wärmetransport entlang des Isoliermantels (6) von der Reaktionszone (2) in die Eintrittszone (1).

Das Kühlmedium fließt durch den Raum (9) in der Doppelwand der Ummantelung (5) und kühlt dadurch die innere Wand der Ummantelung (5). Dadurch wird eine weitere thermische Entkopplung der Eintrittszone (1) von der Reaktionszone (2) realisiert, da die durch die Ummantelung (5) durch Wärmeleitung von der Reaktionszone (2) in die Eintrittszone (1) gelangende Wärme in das Kühlmedium übertragen wird. Nach Durchströmen der Doppelwand tritt das Kühlmedium aus dem Raum (9) zwischen den Doppelwänden durch einen der Anschlüsse (7a, 7b) wieder aus.

Dadurch wird die Wirkung des Isoliermantels (6) von der Kühlung durch das Kühlmedium unterstützt. Durch geeignete Wahl der Isoliermaterialien und deren Stärke so wie des Kühlmediums bleibt die Temperatur der dem Eduktgasgemisch gewandten Wand des Isoliermantels (6) unterhalb der Zünd- bzw. Reaktionstemperatur des Eduktgasgemisches, und unerwünschte vorzeitige Reaktionen werden unterbunden.

### Beispiel 4 (nicht erfindungsgemäß)

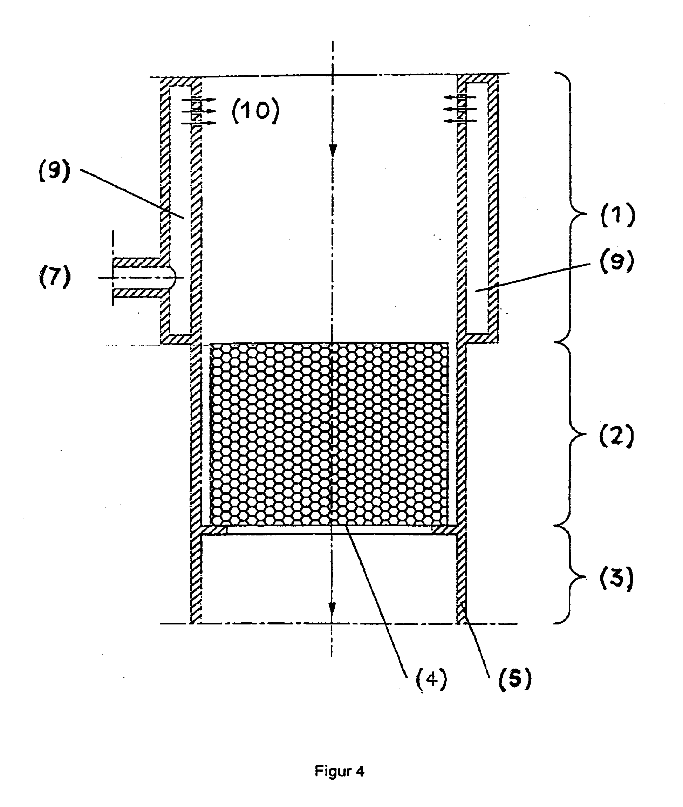

In Figur 4 ist eine ähnliche Vorrichtung wie in Figur 2 dargestellt. Hier erfolgt die thermischen Entkopplung zwischen Eintritts- und Reaktionszone (1, 2) durch Kühlen der Eintrittszone.

Auch in dieser Ammoniakoxidationsvorrichtung liegen Eintrittszone (1), Reaktionszone (2) und Austrittszone (3) vor.

Das ammoniak-/sauerstoffhaltige Gasgemisch wird in die Eintrittszone (1) eingeleitet. Danach trifft das Gemisch in der Reaktionszone (2) auf den Ammoniakoxidationskatalysator (4). Anschließend verläßt das Produktgemisch der Oxidationsreaktionen die Reaktionszone (2) durch die Austrittszone (3).

Die Ummantelung (5) aller drei Zonen hält den Katalysator (4). Die Ummantelung (5) kann selbst die Wände eines Druckbehälters darstellen, oder alternativ kann die Ummantelung in einem Raum untergebracht werden, der wiederum selbst von einem Druckmantel umgeben ist (hier nicht dargestellt).

In der Höhe der Eintrittszone (1) wird die Ummantelung (5) doppelwandig ausgeführt. An dem Ende der Doppelwand in der Nähe der Reaktionszone (2) ist ein Einlaß (7) für ein Kühlmedium angebracht, das mit dem Eduktgasgemisch, den im Reaktor gewünschten Reaktionen, dem Katalysator (4) und dem Produktgasgemisch verträglich ist. Für den Einsatz in Salpetersäureanlagen kann beispielsweise Luft als geeignetes Kühlmedium eingesetzt werden.

Das Kühlmedium fließt durch den Raum (9) in der Doppelwand und kühlt dadurch die innere Wand der Ummantelung (5) in der Höhe der Eintrittszone (1). Dadurch wird eine thermische Entkopplung der Eintrittszone (1) von der Reaktionszone (2) realisiert, da die infolge von Wärmeleitung durch die Ummantelung (5) von der Reaktionszone (2) in die Eintrittszone (1) gelangende Wärme, in das Kühlmedium übertragen wird.

Durch mehrere kleine Öffnungen (10) am gegen die Strömungsrichtung des Eduktgases gelegenen Ende der Doppelwand tritt das Kühlmedium in die Eintrittszone (1) ein und vermischt sich mit dem Eduktgasgemisch.

Durch geeignete Wahl der Abstände Einlaß (7) und Öffnungen (10) sowie durch geeignete Wahl von Art, Menge, Strömungsgeschwindigkeit und Eintrittstemperatur des Kühlmediums läßt sich die Temperatur im Eduktgasgemisch und an der inneren Oberfläche der Ummantelung (5) unterhalb der Zünd- bzw. Reaktionstemperatur des Eduktgasgemisches regulieren und unerwünschte vorzeitige Reaktionen werden unterbunden.

### Beispiel 5 (erfindungsgemäß)

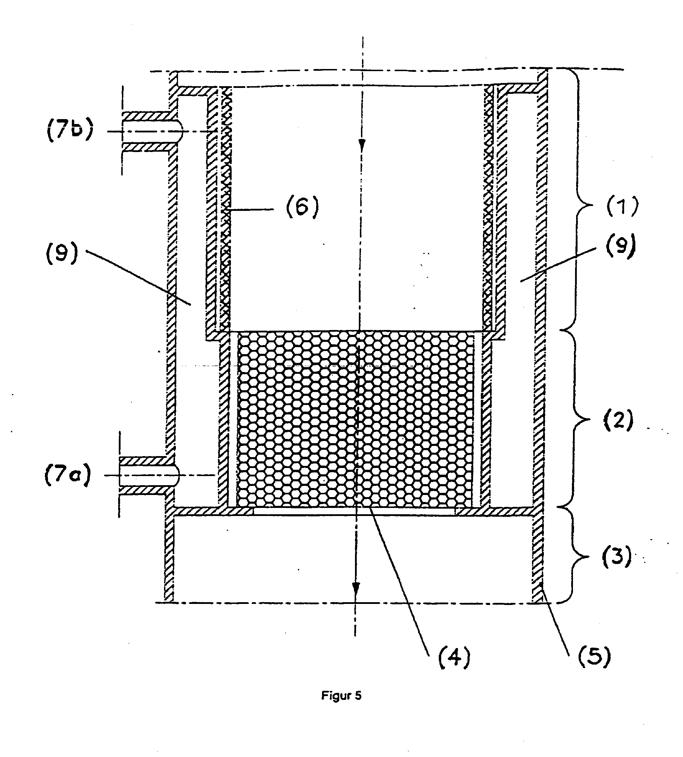

In Figur 5 ist eine ähnliche Vorrichtung wie in Figur 3 dargestellt. Hier verläuft allerdings der Isoliermantel (6) nur in Höhe der Eintrittszone (1).

Auch in dieser Ammoniakoxidationsvorrichtung liegen Eintrittszone (1), Reaktionszone (2) und Austrittszone (3) vor.

Das ammoniak-/sauerstoffhaltige Gasgemisch wird in die Eintrittszone (1) eingeleitet. Danach trifft das Gemisch auf den Ammoniakoxidationskatalysator (4) in der Reaktionszone (2). Anschließend verläßt das Produktgemisch der Oxidationsreaktionen die Reaktionszone (2) durch die Austrittszone (3).

Die Ummantelung (5) aller drei Zonen hält den Katalysator (4) und den Isoliermantel (6). Die Ummantelung (5) kann selbst die Wände eines Druckbehälters darstellen, oder alternativ kann die Ummantelung (5) in einem Raum untergebracht werden, der wiederum selbst von einem Druckmantel umgeben ist (hier nicht dargestellt).

In der Höhe der Eintritts- und Reaktionszone (1, 2) wird die Ummantelung (5) doppelwandig ausgeführt. Dort sind auch Anschlüsse (7a, 7b) für ein Kühlmedium angebracht. Das Kühlmedium kann in oder gegen die Strömungsrichtung des Eduktgasgemisches fließen. Zur thermischen Entkopplung der Eintrittszone (1) von der Reaktionszone (2) dienen sowohl der Isoliermantel (6) als auch die Beaufschlagung des Raums (9) in der Doppelwand der Ummantelung (5) mit einem Kühlmedium.

Der aus einem thermisch isolierenden Material bestehende und die Ummantelung (5) in der Höhe der Eintrittszone (1) abdeckende Isoliermantel (6) verhindert, daß die infolge von Wärmeleitung durch die Ummantelung (5) von der Reaktionszone (2) in die Eintrittszone (1) gelangende Wärme in das Eduktgasgemisch übertragen wird. Da der Isoliermantel (6) nur gering wärmeleitend ist, verhindert bzw. erschwert der Isoliermantel (6) auch den direkten Wärmetransport entlang des Isoliermantels (6) von der Reaktionszone (2) in die Eintrittszone (1).

Das Kühlmedium fließt durch den Raum (9) in der Doppelwand der Ummantelung (5) und kühlt dadurch die innere Wand der Ummantelung (5). Dadurch wird eine weitere thermische Entkopplung der Eintrittszone (1) von der Reaktionszone (2) realisiert, da die durch die Ummantelung (5) durch Wärmeleitung von der Reaktionszone (2) in die Eintrittszone (1) gelangende Wärme in das Kühlmedium übertragen wird. Nach Durchströmen der Doppelwand tritt das Kühlmedium aus dem Raum (9) in der Doppelwand durch einen der Anschlüsse (7a, 7b) wieder aus.

Die Wirkung des Isoliermantels (6) wird von der Kühlung durch das Kühlmedium unterstützt. Durch geeignete Wahl der Isoliermaterialien und deren Stärke sowie des Kühlmediums bleibt die Temperatur der dem Eduktgasgemisch gewandten Wand des Isoliermantels (6) unterhalb der Zünd- bzw. Reaktionstemperatur des Eduktgasgemisches, und unerwünschte vorzeitige Reaktionen werden unterbunden.

### Beispiel 6 (erfindungsgemäß)

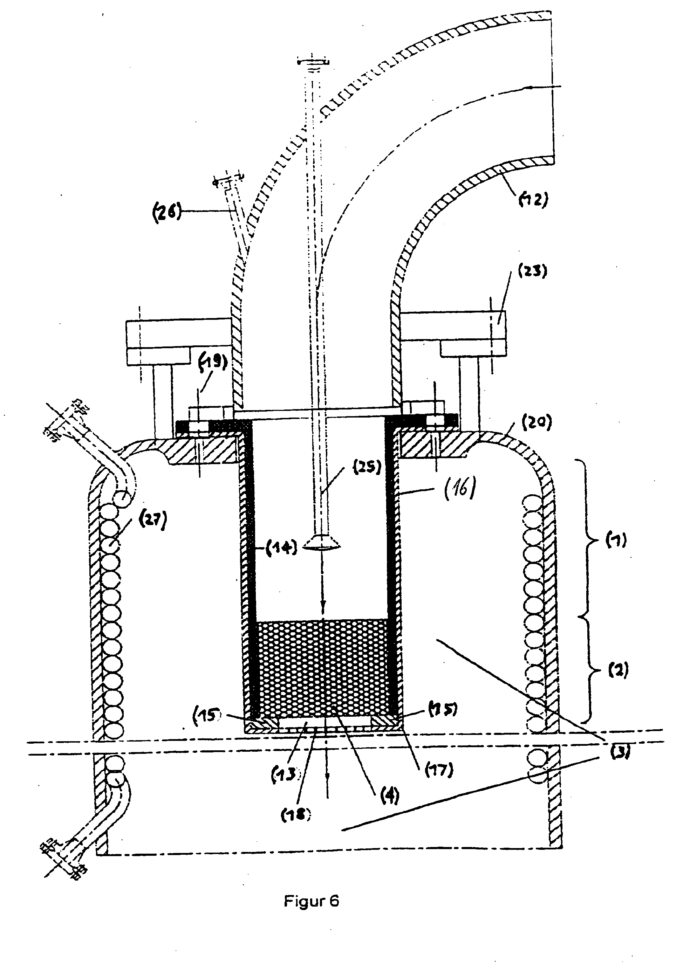

Diese Ausführungsform ist vorwiegend geeignet, die bestehende Haube eines konventionellen Ammoniakoxidationsreaktors zu ersetzen. In Figur 6 ist ein erfindungsgemäßer Ammoniakoxidationsreaktor gezeigt.

Ein sauerstoff- und ammoniakhaltiges Gemisch tritt durch den Stutzen (12) in die Vorrichtung ein. Das Gemisch wird über einen Ammoniakoxidationskatalysator (4) geleitet, der hier wabenförmig ausgestaltet ist oder sich auf und/oder in einem wabenförmigen Träger befindet. Dort wird das Ammoniak durch Reaktion mit einem Teil des Sauerstoffs im Eduktgemisch zu Stickstoffmonoxid umgesetzt. Durch die exotherme Reaktion findet eine Temperaturerhöhung im Ammoniakoxidationskatalysator (4) statt, der sich in der Reaktionszone (2) befindet. Das heiße Produktgemisch tritt durch Öffnung (13) hinter dem Ammoniakoxidationskatalysator (4) in einen Raum (3) ein, welcher die Austrittszone darstellt. Im Anschluß an diesen Raum (3) wird das heiße Produktgas in eine hier nicht dargestellte Gasturbine oder einen oder mehrere hier nicht dargestellten Wärmeaustauscher zur Rückgewinnung von Energie oder zur anderweitigen Verwendung der Prozesswärme geleitet.

Um die thermische Entkopplung der Edukt-Zufuhrseite von der Reaktionszone (2) zu realisieren, wird der Ammoniakoxidationskatalysator (4) in eine aus temperaturbeständigem thermisch isolierendem Material, beispielsweise aus Keramik oder Quarzglas, gefertigte Hülse (14) eingesetzt. Hierdurch werden eventuelle Vorzündungen des ammoniak- und sauerstoffhaltigen Eduktgasgemisches unterbunden. Der Ammoniakoxidationskatalysator (4) sitzt dabei lose in der Hülse (14) und ruht auf einem Stützring (15) und - bei einem mehrteiligen Katalysator (4) - mehreren nicht dargestellten Stützbalken aus temperaturbeständigem Material, beispielsweise Keramik oder Quarzglas. Der Stützring (15) verhindert einen eventuellen Gasbypass. Die Stützbalken, falls installiert, sind so ausgeführt, daß sie nur einen unwesentlichen Anteil des Strömungsquerschnitts versperren.

Zur Unterstützung und zum Schutz der Hülse (14) ist diese mit einer Metallhülse (16) aus hochtemperaturbeständigem Material ummantelt. Das untere Ende der Metallhülse (16) ist mit einer Lippe (17) versehen, welche den Stützbalken bzw. Stützring (15) und damit indirekt auch den Katalysator (4) unterstützt. Am unteren Ende der Metallhülse (16) ist ein Gitterrost (18) angebracht, durch den das Produktgas aus dem Ammoniakoxidationskatalysator (4) in den Raum (3) fließt. Der Gitterrost (18) dient der mechanischen Stabilisierung der Metallhülse (16) und der Unterstützung etwaiger Stützbalken. Für den Fall, daß der Ammoniakoxidationskatalysator (4) nicht nur aus einem Teil besteht, sondern aus mehreren Teilen zusammengesetzt ist, dient der Gitterrost (18) dazu, die einzelnen Teile über den Stützbalken zu unterstützen. Falls die Hülse (14) unvorhergesehener Weise brechen sollte, etwa wegen thermischer

Belastung, verhindern Metallhülse (16), Lippe (17) und Gitterrost (18) außerdem ein Herunterfallen von Hülse (14) und Ammoniakoxidationskatalysator (4) in den Raum (3).

Hülse (14) und Metallhülse (16) sind mit Bolzen und Muttern (19) mit dem Druckmantel (20) des Ammoniakoxidationsreaktors verbunden. Der Druckraum wird nach außen durch einen am Behälter angebrachten Druckflansch (23) abgeschlossen.

Zum Katalysatorwechsel wird durch Lösen der Schraubverbindungen der Stutzen (12) entfernt. Anschließend werden die Muttern bzw. Bolzen (19) gelöst und die Metall- und Keramik- bzw. Quarzglashülse (16, 14) samt Ammoniakoxidationskatalysator (4) aus dem Reaktor entfernt. Um die Dauer des Anlagestillstandes zu minimieren (auch gegenüber einem konventionellen Ammoniakoxidationsreaktor), kann eine zweite vor dem Stillstand bereitgestellte aus Metall- und Keramik- bzw. Quarzglashülsen (16, 14) und neuem Ammoniakoxidationskatalysator (4) bestehende Einheit sofort in den Reaktor installiert werden.

Um bei Bedarf die Ammoniakoxidationsreaktion während der Inbetriebnahme zu unterstützen, kann der Ammoniakoxidationskatalysator (4) über eine Zündlanze (25) vorgeheizt bzw. aktiviert werden. Die Zündlanze (25) besteht aus einem dünnen Rohr, durch welches Wasserstoff in den Ammoniakoxidationsreaktor geleitet wird, und aus einer Vorrichtung, welche den Wasserstoffstrom am offenen Ende der Zündlanze zum Zünden bringen kann.

Der Kontrolle des Zündvorgangs und der Überprüfung des Zustands des Ammoniakoxidationskatalysators (4) während des Betriebs dient das im Krümmer des Ammoniakoxidationsreaktors montierte Schauglas (26). Die Kontrolle kann manuell nach Augenschein oder mit Hilfe von entsprechenden Messeinrichtungen wie Photometer erfolgen.

Um die Temperaturbelastung am Material der Wand des Druckbehälters im Raum (3) nach dem Ammoniakoxidationskatalysator (4) zu mildern, wird die Wand mit einer auf der Innenseite angebrachten Flossenrohrkühlung (27) versehen. Durch die Rohre der Flossenwand fließt Wasser oder ein anderes Kühlmedium.

### Beispiel 7 (erfindungsgemäß)

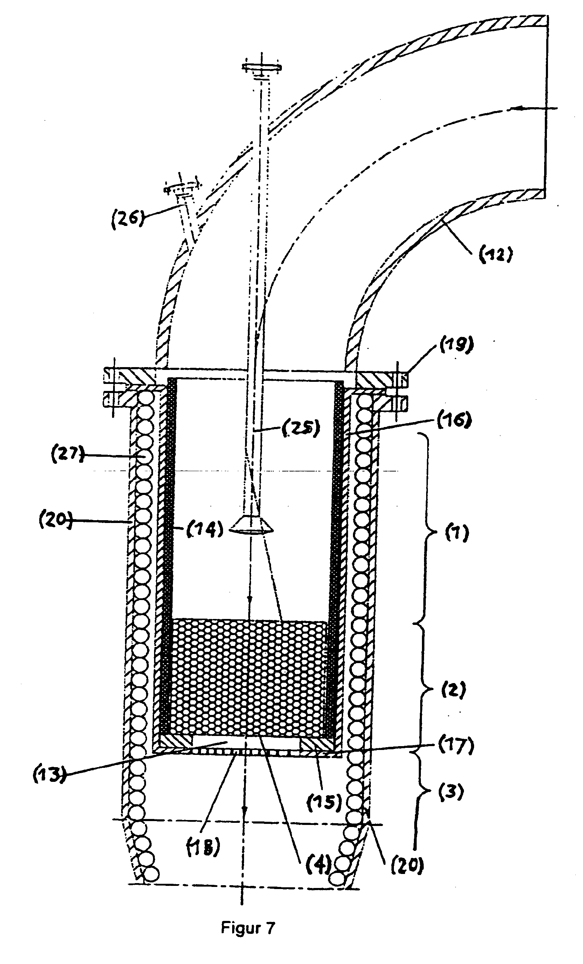

Diese in Figur 7 dargestellte Ausgestaltung eines erfindungsgemäßen Ammoniakoxidationsreaktors ist besonders gut dafür geeignet, neue Anlagen zur Herstellung von NO auszurüsten, da die Notwendigkeit einer Anpassung an den Durchmesser eines bereits vorhanden Wärmerückgewinnungsapparates, wie z.B. eines Dampfkessels, nicht mehr gegeben ist.

Der prinzipielle Unterschied zum Reaktor des Beispiels 6 liegt darin, daß die Flossenwand (27) sich an die Metallhülse (16) anschmiegt und somit eine Anpassung an den in der Regel größeren Durchmesser eines nachgeschalteten Apparates nicht erforderlich ist. Bei dieser Ausführungsform können die nachgeschalteten Apparate dem Ammoniakoxidationsreaktor angepaßt werden. Als Alternative zur dargestellten Aufhängung der Metallhülse (16) kann die für die Unterstützung des Katalysators (4) vorgesehene Metalllippe (17) direkt an der Flossenwand (27) angebracht werden, anstatt an der Metallhülse (16). Das wirkt sich positiv auf die mechanische Stabilität der Konstruktion aus.

Die übrigen in Figur 7 dargestellten Elemente entsprechen den Elementen der Figur 6. Dabei handelt es sich um Öffnung (13), Stützring (15), Gitterrost (18), Bolzen und Muttern (19), Druckmantel (20), Zündlanze (25) und Schauglas (26).

### Beispiele 8a bis 8d

Bei einem Test mit Übergangsmetalloxid-Wabenkatalysatoren zur NH₃-Oxidation, bei welchem versucht wurde, abweichend von der sonst üblichen Katalysatordimensionierung, die Anströmung auf eine geringer Anströmfläche bei vergleichsweise großer Tiefe des Katalysatorbettes (5 cm) zu fokussieren, wurde im Versuchsreaktor unter atmosphärischen Bedingungen bei einer Lineargeschwindigkeit von 1,0 m/s eine nur geringe Selektivität bezüglich der NOₓ-Bildung gefunden.

Auch eine Erhöhung der Lineargeschwindigkeit auf 2,0 m/s führte nur zu einer unzureichenden Verbesserung der NOₓ-Selektivität. Die Ergebnisse sind in der folgenden Tabelle 1 dargestellt.

**Tabelle 1**

| Beispiel Nr. | Lineargeschwindigkeit | Raumgeschwindigkeit | NH₃-Umsatz | NH₃-Eingangskonzentration | NOₓ-Selektivität | Reaktormaterial |
|---|---|---|---|---|---|---|
| 8a | 1,0 m/s | 10.000 h⁻¹ | ∼100% | 10% | 47% | Edelstahl |
| 8b | 2,0 m/s | 20.000 h⁻¹ | ~100% | 10% | 59% | Edelstahl |
| 8c | 1 ,0 m/s | 10.000 h⁻¹ | ∼100% | 1% | 38% | Edelstahl |
| 8d | 1,0 m/s | 10.000 h⁻¹ | ~100% | 1 % | 100% | Quarzglas |

### Durchführung der Versuche

Ein Vollwabenkatalysator (200 csi, Länge 5 cm, Durchmesser 1,8 cm) bestehend aus LaCoO₃-Perowskit, welcher in einem rohrförmigen Reaktor aus Edelstahl bzw. aus Quarzglas eingesetzt war, wurde mit einem Gemisch aus 10% bzw. 1% Ammoniak in Luft durchströmt. Das Reaktorrohr war in einem Röhrenofen positioniert, mit dessen Hilfe mögliche Wärmeverluste ausgeglichen werden konnten. Die Temperaturregelung erfolgte über ein Thermoelement, welches ca. 0,5 cm unterhalb der Katalysatorwabe (austrittsseitig) angeordnet war. Die Austrittstemperatur betrug einheitlich 900°C.

Die Zusammensetzung des ein- und austretenden Gasstromes wurde mit Hilfe eines FTIR-Analysators (Modell Avatar Fa. Nicolet) mit Gasküvette untersucht.

Der in Tabelle 1 in Versuchen 8a bis 8c dargestellte Befund kann damit erklärt werden, daß ein signifikanter Anteil des zugeführten NH₃ vor Eintritt in die Katalysatorzone in N₂ und H₂O zersetzt wurde, wie durch ein entsprechendes Experiment im leeren Reaktorrohr bestätigt wurde. Dabei wurde in dem von außen beheizten Reaktionsrohr auch ohne Anwesenheit des Wabenkatalysators bei einer Lineargeschwindigkeit von 1,0 m/s ein vollständiger Umsatz an NH₃ registriert, welcher im wesentlichen zur Bildung von N₂ und H₂O führte.

Führt man den Versuch gemäß Beispiel 8c in einem Reaktor aus Quarzglas durch, welcher ein thermischer Isolator ist und zugleich inert ist, so stellt man überraschend fest, dass sich die NOₓ-Selektivität drastisch erhöht (vergl. Beispiel 8d).

## Patentansprüche

1. Reaktor für die katalytische, exotherme Oxidation von Ammoniak in der Gasphase durch Umsetzung eines Eduktgases zu einem Produktgas mit in Strömungsrichtung des Eduktgases gesehen einer Eintrittszone (1), einer mindestens einen Katalysator (4) enthaltenden Reaktionszone (2) und einer Austrittszone (3) für das Produktgas, bei dem in die Eintrittszone (1) ein Ammoniak und Sauerstoff enthaltendes Eduktgasgemisch eingeleitet wird, im Bereich der Eintrittszone (1) oder im Bereich der Eintrittszone (1) und der Reaktionszone (2) mindestens ein Isoliermantel (6) vorgesehen ist, der den Innenraum des Reaktors in der Höhe der Eintrittszone (1) oder in der Höhe der Eintrittszone (1) und der Reaktionszone (2) gegen die Reaktorummantelung (5) isoliert und worin mindestens eine Vorrichtung (7a, 7b, 27) zum Durchleiten eines Kühlmediums im Bereich der Eintrittszone (1) oder im Bereich der Eintrittszone (1) und der Reaktionszone (2) vorgesehen ist, die sich in der Reaktorummantelung (5, 20) oder an der Innenwand der Reaktorummantelung (5, 20) befindet, wobei Isoliermantel (6) und Vorrichtung zum Durchleiten eines Kühlmediums (7a, 7b, 27) den Wärmetransport von der Reaktionszone (2) in die Eintrittszone (1) verringern und worin die Innenwände des Reaktors im Bereich der Eintrittszone (1) oder im Bereich der Eintrittszone (1) und der Reaktionszone (2) aus inertem Material bestehen.

2. Reaktor nach Anspruch 1, **dadurch gekennzeichnet, daß** die Mittel zur Verringerung des Wärmetransports von der Reaktionszone (2) in die Eintrittszone (1) im Bereich der Eintrittszone (1) und der Reaktionszone (2) vorgesehen sind.

3. Reaktor nach Anspruch 1, **dadurch gekennzeichnet, daß** das inerte Material ausgewühlt wird aus der Gruppe Keramik, Quarzglas, Schamotte, Email oder Metallen mit polierten Oberflächen.

4. Reaktor nach Anspruch 1, **dadurch gekennzeichnet, daß** Eintrittszone (1), Reaktionszone (2) und Austrittszone (3) von einer Reaktorummantelung (5) umgeben sind, welche zusätzlich Träger für den Katalysator (4) sowie für einen Isoliermantel (6) ist, der den Innenraum des Reaktors im Bereich zumindest eines Teils der Eintrittszone (1) oder im Bereich der Reaktionszone (2) und zumindest eines Teils der Eintrittszone (1) thermisch von der Reaktorummantelung (5) isoliert und so die Übertragung von Wärme aus der Reaktionszone (2) in das Eduktgas in der Eintrittszone (1) hemmt.

5. Reaktor nach Anspruch 1, **dadurch gekennzeichnet, daß** Eintrittszone (1), Reaktionszone (2) und Austrittszone (3) von einer in der Höhe der Eintrittszone (1) oder in der Höhe der Eintrittszone (1) und der Reaktionszone (2) doppelwandig ausgeführten Reaktorummantelung (5) umgeben sind, und daß an mindestens einem Ende der doppelwandigen Reaktorummantelung ein Anschluß (7) für ein Kühlmedium zum Einleiten in den durch die doppelwandige Reaktorummantelung gebildeten Raum (9) vorgesehen ist, zur Kühlung der inneren Wand der Reaktorummantelung (5), wobei vorzugsweise in der Innenwand der doppelwandigen Reaktorummantelung (5) mindestens eine Öffnung (10) vorgesehen ist, durch welche das Kühlmedium in die Eintrittszone (1) eintritt und sich mit dem Eduktgas vermischt oder wobei vorzugsweise an der doppelwandigen Reaktorummantelung Anschlüsse (7a, 7b) für das Ein- und Ableiten des Kühlmediums vorgesehen sind.

6. Reaktor nach einem der Ansprüche 4 bis 5, **dadurch gekennzeichnet, daß** die Reaktorummantelung (5) als Wand eines Druckbehälters ausgestaltet ist oder in einem Raum untergebracht ist, der von einem Druckmantel umgeben ist oder dass neben dem mindestens einen Isoliermantel (6) mindestens eine doppelwandig ausgeführte Reaktorummantelung (5) vorgesehen ist, welche zusätzlich Träger für den Katalysator (4) ist, und die mindestens einen Anschluss (7) für ein Kühlmedium aufweist.

7. Reaktor nach Anspruch 1, **dadurch gekennzeichnet, daß** der Isoliermantel (6) eine aus temperaturbeständigem und thermisch isolierendem Material gefertigte Hülse (14) ist, in die der Katalysator (4) eingesetzt ist.

8. Reaktor nach Anspruch 7, **dadurch gekennzeichnet, daß** die Hülse (14) mit einer Metallhülse (16) aus temperaturbeständigem Material ummantelt ist, deren unteres Ende vorzugsweise mit einer Metalllippe (17) versehen ist, und daß am unteren Ende der Metallhülse (16) ein Gitterrost (18) angebracht ist, durch den das Gasgemisch aus der Reaktionszone (2) in die Austrittszone (3) fließt, wobei vorzugsweise Hülse (14) und Metallhülse (16) mit Bolzen und Muttern (19) mit dem Druckmantel (20) des Reaktors verbunden sind.

9. Reaktor nach einem der Ansprüche 7 bis 8, **dadurch gekennzeichnet, daß** eine Zündlanze (25) vorgesehen ist.

10. Reaktor nach einem der Ansprüche 7 bis 9, **dadurch gekennzeichnet, daß** auf der Innenseite der Wand des Druckbehälters des Reaktors eine Kühlvorrichtung, vorzugsweise eine Flossenrohrkühlung (27), vorgesehen ist, um die Temperaturbelastung der Wand des Druckbehälters in der Austrittzone (3) nach der Reaktionszone (2) zu mildern.

11. Reaktor nach einem der Ansprüche 1 bis 10, **dadurch gekennzeichnet, daß** der Katalysator (4) in Form einer Wabe ausgebildet ist oder auf und/oder in einem wabenförmig ausgestalteten Trägermaterial angebracht ist, und dass der Katalysator vorzugsweise in Form einer Schüttung oder Packung vorliegt mit einer in Strömungsrichtung gesehenen Tiefe von mindestens 3 cm.

12. Verfahren zur Durchführung einer katalytischen, exothermen Oxidation von Ammoniak in der Gasphase unter Einsatz des Reaktors nach Anspruch 1 mit den Maßnahmen:
i) Einleiten eines Ammoniak und Sauerstoff enthaltenden Eduktgasgemisches in die Eintrittszone (1) eines Reaktors,
ii) Zuführen des Eduktgasgemisches zu einer Katalysator (4) enthaltenden Reaktionszone (2) unter Bedingungen, daß sich das Eduktgasgemisch in der Reaktionszone (4) in exothermer Reaktion ganz oder teilweise zu Produkten umsetzt,
iii) Abführen des umgesetzten Eduktgases durch eine Austrittszone (3) aus dem Reaktor, und
iv) Bereitstellen von Mitteln zur Verringerung des Transports von Reaktionswärme von der Reaktionszone (2) in die Eintrittszone (1) in der Form mindestens eines Isoliermantels (6), der den Innenraum des Reaktors in der Höhe der Eintrittszone (1) oder in der Höhe der Eintrittszone (1) und der Reaktionszone (2) gegen die Reaktorummantelung (5) isoliert und mindestens einer Vorrichtung (7a, 7b, 27) zum Durchleiten eines Kühlmediums im Bereich der Eintrittszone (1) oder im Bereich der Eintrittszone (1) und der Reaktionszone (2), die sich in der Reaktorummantelung (5, 20) oder an der Innenwand der Reaktorummantelung (5, 20) befindet, und Verwenden eines Reaktors, dessen die Innenwände im Bereich der Eintrittszone (1) oder im Bereich der Eintrittszone (1) und der Reaktionszone (2) aus inertem Material bestehen.

13. Verfahren nach Anspruch 12, **dadurch gekennzeichnet, daß** das Eduktgasgemisch zur Oxidation von Ammoniak eingesetzt wird und das resultierende Produkt für die Herstellung von Caprolactam und/oder Salpetersäure verwendet wird.

14. Verfahren nach einem der Ansprüche 12 bis 13, **dadurch gekennzeichnet, daß** ein in Wabenform ausgestalteter Katalysator eingesetzt wird oder daß der Katalysator in Form einer Katalysatorschüttung oder einer Katalysatorpackung vorliegt und eine in Strömungsrichtung gesehene Tiefe von mindestens 3 cm aufweist.

15. Verwendung des Reaktors nach einem der Ansprüche 1 bis 11 zur Ammoniakoxidation, wobei der Reaktor vorzugsweise in eine Anlage zur Herstellung von Caprolactam oder von Salpetersäure integriert ist.

## Claims

1. A reactor for the catalytic, exothermic oxidation of ammonia in the gas phase by reaction of a feed gas to form a product gas, which comprises, viewed in the flow direction of the feed gas, an inlet zone (1), a reaction zone (2) containing at least one catalyst (4) and an outlet zone (3) for the product gas, wherein a feed gas mixture comprising ammonia and oxygen is introduced into the inlet zone (1), at least one insulating liner (6) which insulates the interior space of the reactor at the height of the inlet zone (1) or at the height of the inlet zone (1) and the reaction zone (2) from the reactor wall (5) is provided in the region of the inlet zone (1) or in the region of the inlet zone (1) and the reaction zone (2) and at least one apparatus (7a, 7b, 27) for conveying a cooling medium is provided in the region of the inlet zone (1) or in the region of the inlet zone (1) and the reaction zone (2), which apparatus is located in the reactor wall (5, 20) or on the interior wall of the reactor wall (5, 20), where the insulating liner (6) and apparatus for conveying a cooling medium (7a, 7b, 27) reduce heat transport from the reaction zone (2) into the inlet zone (1) and/or where the interior walls of the reactor in the region of the inlet zone (1) or in the region of the inlet zone (1) and the reaction zone (2) consist of inert material.

2. The reactor as claimed in claim 1, wherein the means for reducing heat transport from the reaction zone (2) to the inlet zone (1) are provided in the region of the inlet zone (1) and the reaction zone (2).

3. The reactor as claimed in claim 1, wherein the inert material is selected from the group comprising ceramic, fused silica, shamotte, enamel or metals having polished surfaces.

4. The reactor as claimed in claim 1, wherein inlet zone (1), reaction zone (2) and outlet zone (3) are surrounded by a reactor wall (5) which is additionally support for the catalyst (4) and for an insulating liner (6) which thermally insulates the interior space of the reactor in the region of at least part of the inlet zone (1) or in the region of the reaction zone (2) and at least part of the inlet zone (1) from the reactor wall (5) and thus inhibits transfer of heat from the reaction zone (2) to the feed gas in the inlet zone (1).

5. The reactor as claimed in claim 1, wherein inlet zone (1), reaction zone (2) and outlet zone (3) are surrounded by a reactor wall (5) configured as a double wall at the height of the inlet zone (1) or at the height of the inlet zone (1) and the reaction zone (2) and a connection (7) for introduction of a cooling medium into the space (9) formed by the double-walled reactor wall is provided at at least one end of the double-walled reactor wall to enable the inner wall of the reactor wall (5) to be cooled, where at least one opening (10) through which the cooling medium enters the inlet zone (1) and mixes with the feed gas is preferably provided in the inner wall of the double-walled reactor wall (5) or where connections (7a, 7b) for introduction and discharge of the cooling medium are preferably provided on the double-walled reactor wall.

6. The reactor as claimed in one of claims 4 to 5, wherein the reactor wall (5) is configured as a wall of a pressure vessel or is accommodated in a space which is surrounded by a pressure jacket or wherein at least one double-walled reactor wall (5) which is additionally a support for the catalyst (4) and has at least one connection (7) for a cooling medium is provided in addition to the at least one insulating liner (6).

7. The reactor as claimed in claim 1, wherein the insulating liner (6) is a sleeve (14) which is made of a heat-resistant and thermally insulating material and into which the catalyst (4) is inserted.

8. The reactor as claimed in claim 7, wherein the sleeve (14) is surrounded by a metal sleeve (16) composed of a heat-resistant material whose lower end is preferably provided with a metal lip (17) and a grating (18) through which the gas mixture flows from the reaction zone (2) into the outlet zone (3) is installed at the lower end of the metal sleeve (16), where sleeve (14) and metal sleeve (16) are preferably connected to the pressure jacket (20) of the reactor by means of bolts and nuts (19).

9. The reactor as claimed in one of claims 7 to 8, wherein an ignition lance (25) is provided.

10. The reactor as claimed in any of claims 7 to 9, wherein a cooling apparatus, preferably a thinned tube cooling facility (27), is provided on the inside of the wall of the pressure vessel of the reactor in order to moderate the temperature stress on the wall of the pressure vessel in the outlet zone (3) downstream of the reaction zone (2).

11. The reactor as claimed in any of claims 1 to 10, wherein the catalyst (4) is configured in the form of a honeycomb or has been applied to and/or introduced into a support material configured as a honeycomb and wherein the catalyst is preferably in the form of a bed or packing having a depth viewed in the flow direction of at least 3 cm.

12. A process for carrying out a catalytic, exothermic oxidation of the ammonia in the gas phase using the reactor as claimed in claim 1, which comprises the measures:
i) introduction of a feed gas mixture comprising ammonia and oxygen into the inlet zone (1) of a reactor,
ii) introduction of the feed gas into a reaction zone (2) containing a catalyst (4) under conditions under which the feed gas mixture is entirely or partly converted into products in an exothermic reaction in the reaction zone (4),
iii) discharge of the product gas mixture from the reactor via an outlet zone (3) and
iv) provision of means for reducing the transport of heat of reaction from the reaction zone (2) to the inlet zone (1) in the form of at least one insulating liner (6), which insulates the interior space of the reactor at the height of the inlet zone (1) or at the height of the inlet zone (1) and the reaction zone (2) from the reactor wall (5) and at least one apparatus (7a, 7b, 27) for conveying a cooling medium in the region of the inlet zone (1) or in the region of the inlet zone (1) and the reaction zone (2), which apparatus is located in the reactor wall (5, 20) or on the interior wall of the reactor wall (5, 20), and use of a reactor whose interior walls in the region of the inlet zone (1) or in the region of the inlet zone (1) and the reaction zone (2) consist of inert material.

13. The process as claimed in claim 12, wherein the feed gas mixture is used for the oxidation of ammonia and the resulting product is used for the preparation of caprolactam and/or nitric acid.

14. The process as claimed in one of claims 12 to 13, wherein a catalyst configured as a honeycomb is used or wherein the catalyst is present in the form of a catalyst bed or a catalyst packing and has a depth viewed in the flow direction of at least 3 cm.

15. The use of the reactor as claimed in any of claims 1 to 11 for the oxidation of ammonia, where the reactor is preferably integrated into a plant for the preparation of caprolactam or of nitric acid.

## Revendications

1. Réacteur pour l'oxydation catalytique exothermique de l'ammoniac en phase gazeuse par conversion d'un gaz d'éduit en un gaz de produit avec, considérées dans la direction d'écoulement du gaz d'éduit, une zone d'entrée (1), une zone de réaction (2) contenant au moins un catalyseur (4) et une zone de sortie (3) pour le gaz de produit, dans lequel on introduit dans la zone d'entrée (1) un mélange de gaz d'éduit contenant de l'ammoniac et de l'oxygène, il est prévu dans la région de la zone d'entrée (1) ou dans la région de la zone d'entrée (1) et de la zone de réaction (2) au moins une chemise isolante (6), qui isole l'espace intérieur du réacteur à hauteur de la zone d'entrée (1) ou à hauteur de la zone d'entrée (1) et de la zone de réaction (2) contre l'enveloppe de réacteur (5) et dans lequel il est prévu dans la région de la zone d'entrée (1) ou dans la région de la zone d'entrée (1) et de la zone de réaction (2) au moins un dispositif (7a, 7b, 27) pour le passage d'un fluide de refroidissement, qui se trouve dans l'enveloppe de réacteur (5, 20) ou sur la paroi intérieure de l'enveloppe de réacteur (5, 20), dans lequel la chemise isolante (6) et le dispositif pour le passage d'un fluide de refroidissement (7a, 7b, 27) réduisent le transport de chaleur de la zone de réaction (2) à la zone d'entrée (1) et dans lequel les parois intérieures du réacteur dans la région de la zone d'entrée (1) ou dans la région de la zone d'entrée (1) et de la zone de réaction (2) sont constituées d'un matériau inerte.

2. Réacteur selon la revendication 1, **caractérisé en ce que** les moyens pour réduire le transport de chaleur de la zone de réaction (2) à la zone d'entrée (1) sont prévus dans la région de la zone d'entrée (1) et de la zone de réaction (2).

3. Réacteur selon la revendication 1, **caractérisé en ce que** le matériau inerte est choisi dans le groupe céramique, verre de quartz, chamotte, émail ou métaux avec des surfaces polies.

4. Réacteur selon la revendication 1, **caractérisé en ce que** la zone d'entrée (1), la zone de réaction (2) et la zone de sortie (3) sont entourées par une enveloppe de réacteur (5), qui est en plus un support pour le catalyseur (4) ainsi que pour une chemise isolante (6), qui isole thermiquement l'espace intérieur du réacteur, dans la région au moins d'une partie de la zone d'entrée (1) ou dans la région de la zone de réaction (2) et au moins d'une partie de la zone d'entrée (1), par rapport à l'enveloppe de réacteur (5) et réduit ainsi la transmission de chaleur de la zone de réaction (2) au gaz d'éduit dans la zone d'entrée (1).

5. Réacteur selon la revendication 1, **caractérisé en ce que** la zone d'entrée (1), la zone de réaction (2) et la zone de sortie (3) sont entourées par une enveloppe de réacteur (5) réalisée à double paroi à hauteur de la zone d'entrée (1) ou à hauteur de la zone d'entrée (1) et de la zone de réaction (2), et **en ce qu'**il est prévu à au moins une extrémité de l'enveloppe de réacteur à double paroi un raccord (7) pour un fluide de refroidissement à introduire dans l'espace (9) formé par l'enveloppe de réacteur à double paroi, pour le refroidissement de la paroi intérieure de l'enveloppe de réacteur (5), dans lequel il est prévu de préférence dans la paroi intérieure de l'enveloppe de réacteur à double paroi (5) au moins une ouverture (10), par laquelle le fluide de refroidissement entre dans la zone d'entrée (1) et se mélange avec le gaz d'éduit ou dans lequel il est prévu de préférence dans l'enveloppe de réacteur à double paroi des raccords (7a, 7b) pour l'introduction et l'évacuation du fluide de refroidissement.

6. Réacteur selon une des revendications 4 à 5, **caractérisé en ce que** l'enveloppe de réacteur (5) est configurée comme la paroi d'un réservoir sous pression ou est installée dans une chambre, qui est entourée par une enceinte sous pression ou **en ce qu'**il est prévu, en plus de ladite au moins une chemise isolante (6), une enveloppe de réacteur réalisée à double paroi (5), qui est en outre un support pour le catalyseur (4) et qui présente au moins un raccord (7) pour un fluide de refroidissement.

7. Réacteur selon la revendication 1, **caractérisé en ce que** la chemise isolante (6) est une gaine (14) fabriquée en un matériau résistant à la température et thermiquement isolant, dans laquelle le catalyseur (4) est introduit.

8. Réacteur selon la revendication 7, **caractérisé en ce que** la gaine (14) est entourée d'une douille métallique (16) en un matériau résistant à la température, dont l'extrémité inférieure est de préférence munie d'une lèvre métallique (17), et **en ce qu'**il se trouve à l'extrémité inférieure de la douille métallique (16) une grille (18), à travers laquelle le mélange de gaz s'écoule de la zone de réaction (2) à la zone de sortie (3), dans lequel la gaine (14) et la douille métallique (16) sont de préférence assemblées à l'enceinte sous pression (20) du réacteur au moyen de boulons et d'écrous (19).

9. Réacteur selon une des revendications 7 à 8, **caractérisé en ce qu'**il est prévu une lance d'allumage (25).

10. Réacteur selon une des revendications 7 à 9, **caractérisé en ce qu'**il est prévu sur le côté intérieur de la paroi du réservoir sous pression du réacteur un dispositif de refroidissement, de préférence un refroidissement par tubes à ailettes (27), afin d'atténuer la charge thermique de la paroi du réservoir sous pression dans la zone de sortie (3) après la zone de réaction (2).

11. Réacteur selon une des revendications 1 à 10, **caractérisé en ce que** le catalyseur (4) est réalisé en forme de nid d'abeilles ou est installé sur et/ou dans un matériau de support réalisé en forme de nid d'abeilles, et **en ce que** le catalyseur se trouve de préférence sous la forme d'un amas ou d'une garniture avec une profondeur d'au moins 3 cm dans la direction d'écoulement.

12. Procédé pour l'exécution d'une oxydation catalytique exothermique de l'ammoniac en phase gazeuse avec utilisation du réacteur selon la revendication 1, avec les opérations suivantes:
i) introduire un mélange de gaz d'éduit contenant de l'ammoniac et de l'oxygène dans la zone d'entrée (1) d'un réacteur,
ii) envoyer le mélange de gaz d'éduit à une zone de réaction (2) contenant un catalyseur (4) sous des conditions où le mélange de gaz d'éduit se convertit entièrement ou partiellement en produits dans la zone de réaction (4) par une réaction exothermique,
iii) évacuer le gaz d'éduit converti par une zone de sortie (3) hors du réacteur, et
iv) préparer des moyens pour la diminution du transport de chaleur de réaction de la zone de réaction (2) à la zone d'entrée (1) sous la forme d'au moins une chemise isolante (6), qui isole l'espace intérieur du réacteur à hauteur de la zone d'entrée (1) ou à hauteur de la zone d'entrée (1) et de la zone de réaction (2) contre l'enveloppe de réacteur (5) et au moins un dispositif (7a, 7b, 27) pour le passage d'un fluide de refroidissement dans la région de la zone d'entrée (1) ou dans la région de la zone d'entrée (1) et de la zone de réaction (2), qui se trouve dans l'enveloppe de réacteur (5, 20) ou sur la paroi intérieure de l'enveloppe de réacteur (5, 20), et utiliser un réacteur, dont les parois intérieures sont constituées d'un matériau inerte dans la région de la zone d'entrée (1) ou dans la région de la zone d'entrée (1) et de la zone de réaction (2).

13. Procédé selon la revendication 12, **caractérisé en ce que** l'on utilise le mélange de gaz d'éduit pour l'oxydation de l'ammoniac et **en ce que** l'on utilise le produit résultant pour la production de caprolactame et/ou d'acide nitrique.

14. Procédé selon une des revendications 12 à 13, **caractérisé en ce que** l'on utilise un catalyseur façonné en forme de nid d'abeilles ou **en ce que** le catalyseur se trouve sous la forme d'un amas de catalyseur ou d'une garniture de catalyseur et présente une profondeur d'au moins 3 cm considérée dans la direction d'écoulement.

15. Utilisation d'un réacteur selon une des revendications 1 à 11 pour l'oxydation de l'ammoniac, dans laquelle le réacteur est de préférence intégré dans une installation pour la production de caprolactame ou d'acide nitrique.
